# EUROPEAN PATENT SPECIFICATION

(11) **EP 1 560 142 B1**
(45) Date of publication and mention of the grant of the patent: **03.11.2010**
(21) Application number: 05075144.5
(22) Date of filing: 24.01.2005
(51) Int. Cl.: G06Q 20/00

(54) **Electronic point of sale apparatus for mobile telephone credit purchase and other products**
Elektronische Verkaufsstelle für Mobiltelefonguthaben und andere Produkte
Point de vente électronique pour l'achat de crédits de téléphones mobiles et d'autres produits

(30) Priority: 23.01.2004 IE 20040045
(43) Date of publication of application: 03.08.2005
(73) Proprietor: January Patents Limited, Claremorris, County Mayo (IE)
(72) Inventor: Concannon, Gerard, County Mayo (IE); Cattigan, Michael, County Roscommon (IE); Henry, John, County Sligo (IE); Kenna, Sean, County Mayo (IE); Forde, James, County Mayo (IE); Feeney, Dominic, County Mayo (IE)
(74) Representative: McCarthy, Denis Alexis

(56) References cited:
- WO-A-00/79492
- WO-A-02/27629
- WO-A-96/38801
- WO-A-98/47112
- US-A1- 2002 188 510

## Description

This invention relates to an electronic point of sale (EPOS) apparatus for mobile telephone credit purchase in a retail environment.

The invention will be described in the application of an electronic point of sale apparatus for use in a petrol station forecourt but is not in anyway limited to use in only such a retail environment.

Presently, the purchase by customers of credits for mobile telephones, also known as "top-ups" is normally processed by a specifically dedicated terminal unit. When a customer requires to purchase an amount of credit, the operator must move from their main point of sale terminal, operate the dedicated terminal unit to obtain the required amount of credit for the customer and then return to the main point of sale terminal to process the payment by the customer for the telephone credit. The prior art top up application has to be dedicated to the sale of telephone credit and cannot be used for any other function. A separate cash register is also requited to handle the payments by the customer.

WO 02/27629A (Euronet Services, Inc.) discloses a system and method for purchasing goods and services, such as pre-paid-vouchers and recharging pre-pay accounts and may be accessed through a variety of service end points, including automatic teller machines (ATMs), point of sale (POS) systems and personal communication devices.

Other prior art in this field is disclosed in WO 98/47112 A (Stratex/Paradigm Limited et al), US 2002/188510 A1 (Arias Luis), WO 96/38801 A (American Express Trs et al) and WO 00/79492 A (Keil).

The present invention provides an electronic point of sale (EPOS) multi-task apparatus for the purchase of mobile telephone credit and other products in a retail environment, the other products being selected from the group comprising dry products, groceries, hospitality goods, fuel, cigarettes, fruit and vegetables, the apparatus being linkable to a main server over a network, the apparatus comprising a central processing unit and associated memory, a user input device comprising a keyboard and a bar code scanning means, a printer, a releasable and lockable till drawer and an integrated chip and pin payment card reader, the apparatus having a plurality of software control modules for controlling separate ones of the multi task product purchase functions, with one software control module integrated into the EPOS multi-task apparatus and being operable to provide a product comprising a mobile telephone credit for a customer from one or more separate merchants, issue the mobile telephone credit product to the customer, invoice the purchase of the mobile telephone credit product and other products on the EPOS apparatus as one transaction, and print a customer receipt on the printer for the completed transaction, the software module (MPTSCM) for telephone credit comprises:
a top-up button or icon for mobile telephone credit;
means for displaying a list of available mobile telephone networks;
means for selecting a telephone network;
means for selecting a denomination for the selected telephone network;
means for verifying the denomination selected; and
means for adding the selected denomination to a customer's receipt; and means for printing a "top-up voucher" having a unique identifier to enable a customer to input credit into their telephone account, the "top-up voucher" being printed with the customer receipt, whereby the completed transaction can be conducted by an operator through the EPOS apparatus.

Preferably, the mobile telephone credit purchase module has means for presenting a menu of mobile telephone network choices in response to activation of a command key or an icon by a user.

The top up system is integrated into the EPOS multi task apparatus but is not limited to the sale of telephone credits. It can be used to pay a utility bill, purchase lottery tickets, gift vouchers, concert tickets, pay fines, buy television licences and the like. The top up system can be operated in the middle of a transaction and the code or voucher is issued with the receipt as the end of the transaction. This is more convenient for the retailer, the customer and gives a faster transaction time.

Ideally, the mobile telephone credit module has means for adding the purchased credit to a customer's mobile telephone account.

Using the printer of the EPOS apparatus means that only one printer is required with one paper type, for printing a "top-up voucher" having a unique identifier to enable a customer to input credit into their telephone account. The invention can cater for the situation where "top ups" can be purchased from more than one supplier in the same transaction.

The invention allows the top up apparatus to be integrated with the retail system of the trader thereby reducing by half the number of electronic point of sale apparatus in a store.

The invention provides important security features in that the apparatus can trace every top up credit sold. It can be traced back to which operator sold which credit. The prior art terminals have a problem if the paper in the printer runs out. A top up code could be issued that is lost because it is not printed. With the apparatus of the invention the top up code can be reported if there is a problem with the printer. The apparatus can also generate a sales and reconciliation report in a very short time, typically three minutes.

At present, EPOS apparatuses for use in forecourts of petrol stations are computer-based devices having a central processing unit, a working memory and a non volatile memory. An operating system (O.S.) running on the computer has associated software control modules for interfacing with a user input device and a display unit in the shop. The O.S. also has software control modules for interfacing with a control unit remotely mounted on the forecourt pumps, a control unit remotely mounted on a car wash and an electronic fund transfer apparatus. The O. S. also has a software module for monitoring fuel quantities in all fuel tanks. The central processing unit can also read from and write to customer accounts which are in a customer database stored on a hard disk.

With the potential increase of revenues generated by subsidiary services such as hospitality services, many retail outlets such as petrol stations also offer additional products and services which require to be stocked and invoiced in a similar way to fuel products.

Effecting the financial transactions associated with different products such as wet products (fuel) and dry products (groceries or other hospitality goods) requires a separate electronic point of sale apparatus for each different type of product due to the lack of a fully integrated forecourt EPOS apparatus.

Clearly, there is a need to minimise the number of EPOS apparatuses and cash registers located in multi-product type environments such as petrol station forecourts.

Accordingly, there is provided an electronic point of sale (EPOS) apparatus comprising a central processing unit and associated memory, a user input device and a display unit both of which are connected to the central processing unit, the user input device being linked to a suite of software control modules stored in the memory wherein one software control module is capable of controlling one or more fuel pumps and another software control module is capable of identifying dry retail products so that the dispensed fuel and the dry retail products are capable of being invoiced together on the same EPOS apparatus.

Currently, the petrol pump control console is a separate unit to the cash register in a petrol station forecourt shop and there are problems associated with this arrangement including the need for separate power connections and the space taken up by the separate units. If the shop has two cash registers, one at a hospitality counter and another till beside the petrol pump control console at the other end of the shop the problem of separate units for wet goods (fuel) and dry good or hospitality goods is exacerbated. If a customer gets a quantity of fuel and goes into the hospitality counter and buys a hot dog and coffee for example, the petrol station attendant must go to the other end of the petrol station shop to charge for the fuel or alternatively ask the customer to bring their food to the other counter. With the present invention, an attendant at any till in the shop can charge for any product available in the shop together with the fuel purchase.

A scanner is connected to the EPOS apparatus for providing information about dry retail products to the associated dry product identification software control module.

Ideally, the EPOS apparatus also comprises a software control module capable of controlling a car wash.

Preferably, the EPOS apparatus has a software control module capable of monitoring fuel stock.

Ideally, the EPOS apparatus has a software control module interfacing with an electronic fund transfer apparatus

Preferably, the EPOS apparatus has another software control module for accessing customer accounts.

A software control module is provided which is capable of topping up customers mobile phones through the same electronic point of sale apparatus.
Preferably, the display unit has a display screen with a plurality of icons each of which is linked to a software control module.

The mobile phone top-up software control module has means for presenting a menu of mobile phone network choices in response to activation of a top-up icon by a user.

The top-up software control module has means for printing the top-up code onto a customers receipt and adding the value of the top-up to the total receipt.

Preferably, the EPOS apparatus has means for interfacing with closed circuit television (CCTV) which is monitoring the fuel dispensing pumps. This provides an operator with images of the customer and car on the display unit for all fuel transactions.

Advantageously, this ensures that the right person pays for the fuel transaction and it also deters people from driving off without paying.

Ideally, the means for interfacing with CCTV comprises a software module for receiving and processing signals from the CCTV and displaying the processed signals on the display unit of the EPOS apparatus.

Preferably, CCTV is connected to the EPOS apparatus using existing network cabling infrastructure. Other systems require separate duplicate cabling. The apparatus gives efficient installation regarding time material and on going maintenance.

Ideally, the EPOS apparatus comprises means for interfacing with weighing scales.

Preferably, the means for interfacing with the weighing scales comprises a software control module for receiving signals from the scales and storing said signals.

Preferably, weighing scales are connected to the EPOS apparatus.

Ideally, the EPOS apparatus has a software control module for displaying a drop-down menu which always provides nine options.

Ideally, the drop-down menu is initiated when the processor receives a signal from the weighing scales.

Advantageously, the drop-down menu contains nine options because there are nine keys numbered 1 to 9 on a user input keypad.

Preferably, the weighing scales are connected to the EPOS apparatus.

Preferably, the EPOS apparatus has means for controlling at least one vending machine.

Ideally, the vending machine control means comprises a software module capable of receiving inputs from a user and in response to acceptable inputs, the software module is capable of activating a dispensing mechanism of the vending machine. Advantageously, automatic control of vending machines removes the need to have an open display of cigarettes. This is beneficial because cigarettes are small and expensive products which make them attractive products for shoplifters or dishonest staff to steal. The vending machine eliminates the discrepancies between items purchased and items sold.

Preferably, the EPOS apparatus has means for controlling forecourt pole signs. The forecourt pole signs, which display the fuel prices per litre are currently manually adjusted.

Ideally, the pole sign control means is a software control module having means for receiving new pricing information and means for initiating remote driving means capable of adjusting display elements which show the prices on the pole signs.

Preferably, the pole sign display elements are updated in real time as new pricing information arrives at the EPOS apparatus from on-line fuel suppliers.

Ideally, the EPOS apparatus and the display element adjustment means are connected.
Ideally, the EPOS apparatus has means for communicating with an outdoor payment terminal.

Preferably, the communicating means comprises a software module activated in response to input at the keypad or magnetic card reader of the outdoor payment terminal.

Ideally, the outdoor payment terminal software control module is capable of identifying a valid payment means and switching a pump on for dispensing the prepaid amount of fuel. Advantageously, automated and unattended fuel purchases allow retailers to continue selling fuel when the retail outlet is unstaffed.

Ideally, the EPOS apparatus and outdoor payment terminal are connected.

Preferably, the EPOS apparatus has means for effecting payment of utility bills.

Ideally, the payment effecting means comprises a software control module having means for receiving customer identification and payment and means for assigning the payment to an outstanding utility bill on-line.

The EPOS apparatus has an integrated chip and pin payment card reader.

Ideally, the integrated chip and pin card reader has a software control module for associating authenticated information from the card in the reader with an invoiced amount of a current transaction.

Advantageously, the integrated card reader provides on-line authorisation for plastic transactions and eliminates additional terminals.

Ideally, the EPOS apparatus is in communication with a back office support unit.

Preferably, the back office support unit has a microcontroller and an associated memory and has a stock and margin database stored on the memory.

Preferably, the EPOS apparatus has a software control module for interfacing with the stock database on the back office support unit so that sale of a product by scanning on the EPOS apparatus automatically deducts the product from the stock database.

Ideally, the back office support unit has a price index database for all bar coded items of stock supplied by particular suppliers wherein price changes by suppliers are sent to the back office support unit on-line in real time.

Preferably, the EPOS apparatus receives prices from the price index database for all bar coded stock. Advantageously, this results in accurate customer charging in the event of frequent stock price changes.

Ideally, promotional offers are also transmitted electronically from suppliers to the price index database of the back office support unit.

Preferably, an operating system of the back office support unit has web server software running thereon for displaying a web-site having the retailers range of products disclosed thereon.

Ideally, the back office support unit has means for ordering stock on-line from wholesalers.

Preferably, the stock ordering means comprises a software control module capable of periodically reading the stock database and ordering stock from a wholesaler on-line in response to information from the stock database indicating a low volume of a particular stock.

Further, there is provided an electronic point of sale (EPOS) apparatus comprising a central processing unit and associated memory, a user input device and a display unit both of which are connected to the central processing unit, the user input device being linked to a suite of software control modules stored in the memory wherein one software control module is capable of identifying dry retail products and another software control module is capable of topping up customers mobile phones wherein both services are capable of being invoiced together on the same EPOS apparatus.

The apparatus of the invention can be utilized to enable cross marketing between wet stock such as fuel, retail products, hospitality items such as prepared food and drinks, third party vendor stock and can be combined with the sales of any internet retailer.

Using the data generated by the apparatus, the retailer can obtain footfill management reports, queue management reports, category management reports and space management reports. Promotional vouchers can be issued with the receipt in respect of special offers and inducements to encourage customers to frequent a premises at less busy times.

In the present specification, the words connected and communication are used to define relationships between two components and can mean electrical, physical connection but can also cover electromagnetic free space connection.

The invention will now be described with reference to the accompanying drawings, which show by way of example only, the flow charts describing the operation of a number of the software control modules of the EPOS apparatus in accordance with the invention.
Figure 1 is a flow diagram showing the structure of the software module controlling the mobile telephone credit purchase or "top-up" application;
Figure 2 is a flow diagram showing the structure of the software module controlling the bill payment application;
Figure 3 is a flow diagram showing the structure of the software module controlling a vending machine;
Figure 4 is a flow diagram showing the structure of the software module controlling fuel pumps;
Figure 5 is a flow diagram showing the structure of the software module controlling a set of weighing scales;
Figure 6 is a flow diagram showing the various options available with the system;
Figure 7 is a screen shot illustrating the use of the drop down menu for the selection of fruit and vegetable items for sale;
Figure 8 is a screen shot illustrating the use of the drop down menu for the selection of mobile telephone networks for the sale of "top up" credits;
Figure 9 is a screen shot illustrating the use of the drop down menu for the selection of different denominations or values of "top up" credits;
Figure 10 is a screen shot of a typical display used for selling cigarettes with the vending machine of the invention in which the user is invited to select a particular row ;
Figure 11 is a screen shot of a typical display following on from Figure 10 in which the user is invited to select a particular column, thereby selecting the particular cigarettes required by the customer; and

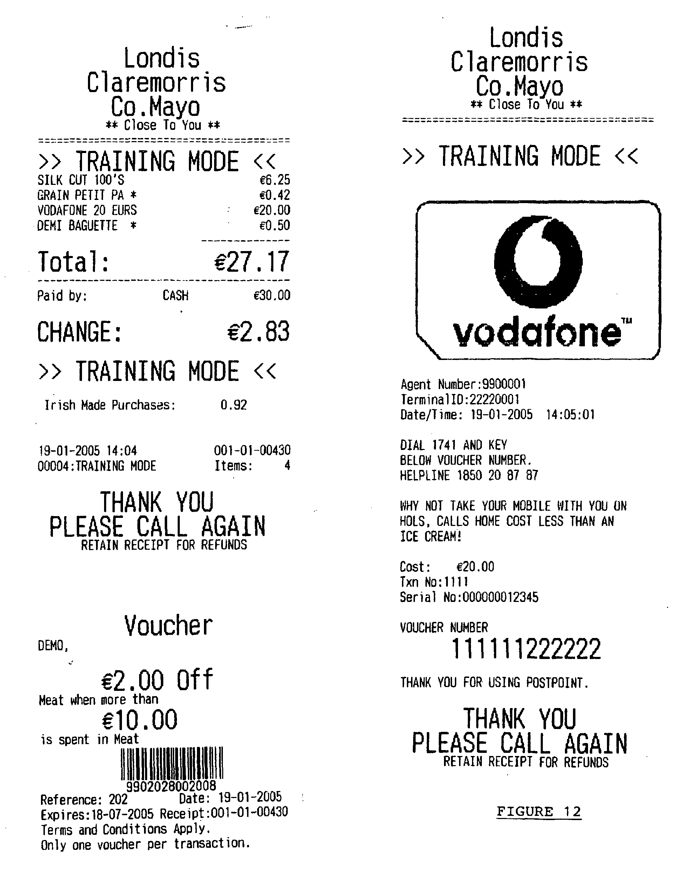

Figure 12 is an example of a sample print out from the printer including a receipt, a telephone top up voucher and a promotional voucher all of which can be readily separated from one another.

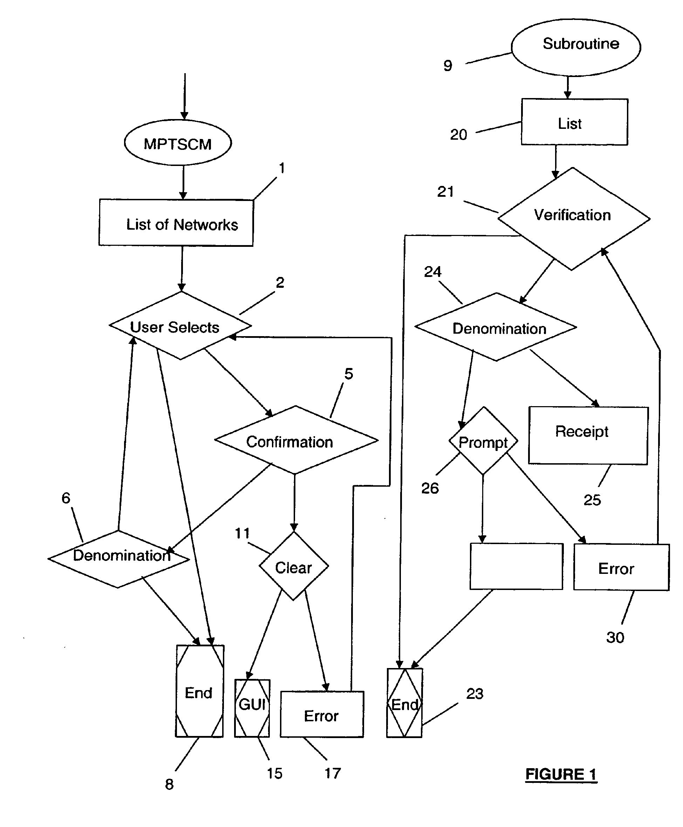

Referring to Figure 1 the inputs from an operator and the response of the mobile phone top-up software control module (MPTSCM) presented as prompts on a user display unit are now described. A user presses the top-up button on the input device of the EPOS apparatus and the MPTSCM returns a list of available networks at 1 and a request for the user to select a network at 2. If the user inputs a network selection at 2, the MPTSCM confirms this at 5 and searches for a network denomination at 6. If the user opts to proceed, the current internal enquiry sequence ends at 8 and a subroutine of the MPTSCM opens at 9. If the user does not select a network at 2, the MPTSCM prompts with a signal to clear at 11. A user's response of yes simply returns the main G. U.I. screen at 15 onto the display screen. A no response from the user at 11 causes the display unit to show an invalid network error at 17 and the MPTSCM returns the get user option prompt at 2 onto the display screen.

When the get denomination subroutine opens at 9, the MPTSCM presents the user with a list of available denominations at 20 and verifies if the user has selected one at 21. If the user does not enter an option, the subroutine ends at 23. If the user selects a denomination this is verified by the MPTSCM at 24, the transaction is added to a receipt at 25 and the subroutine returns the get user option prompt at 21 to the display screen. If the user fails to select a denomination at 24, the subroutine displays a clear prompt at 26 and if the user selects yes, the subroutine ends at 23. If the user selects no to the clear prompt at 26 an invalid denomination error is reported at 30 and the subroutine returns the get user option prompt at 21 to the display screen.

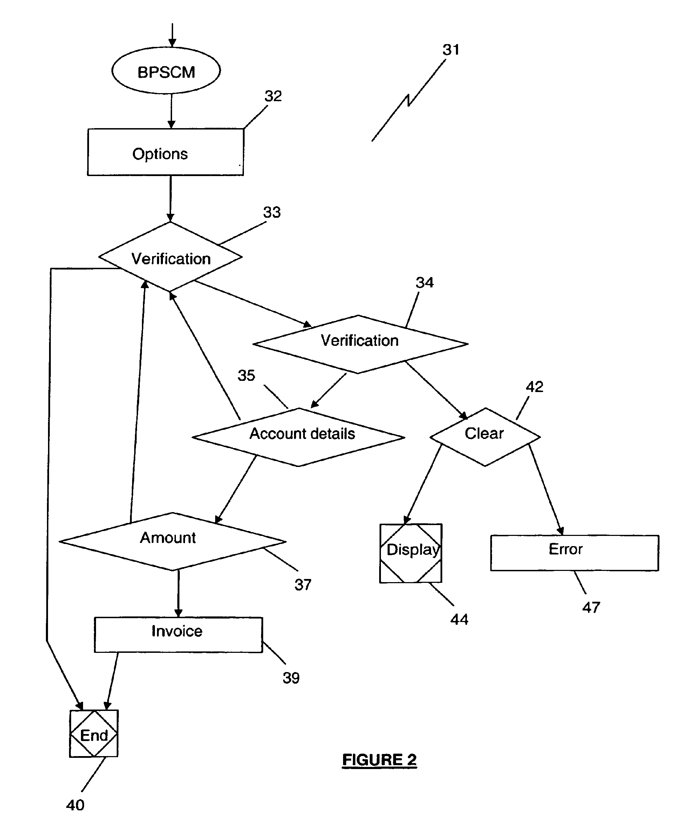

Referring to Figure 2, the inputs from a user and the outputs/prompts presented on the display screen by the bill payment software control module (BPSCM) are indicated generally by the reference numeral 31. A user initiates the BPSCM by pressing the bill payment button on the user input device of the EPOS apparatus and a list of bill payment options such as electricity or gas bill are presented on the display screen at 32. The user is prompted to select an option and the BPSCM verifies that the user selected an option at 33 and if the user selects a valid bill for payment this is also verified by the BPSCM at 34. The user is prompted for their account details at 35 and if the user enters their account details validly at 35, they are prompted by the BPSCM to enter the amount required to pay the bill at 37. The amount is added to the overall invoice at 39 and the BPSCM ends at 40. If the user does not provide an option at the original prompt for a bill type at 32, the BPSCM ends at 40. If the user selects a bill type to pay at 33 but declines to select a valid type of payment at 41, the user is prompted to clear the screen at 42. If the user selects yes the main menu at 44 is returned to the display screen. If the user replies no to the clear prompt, the BPSCM reports an invalid bill pay option error at 47 and returns the get user option prompt at 33 to the screen. If the user does not supply account details when requested at 35, the BPSCM returns to the get user option at 33 onto the display screen. Similarly, if the user does not supply an amount to clear the bill, the BPSCM returns the get user option at 33 onto the display screen.

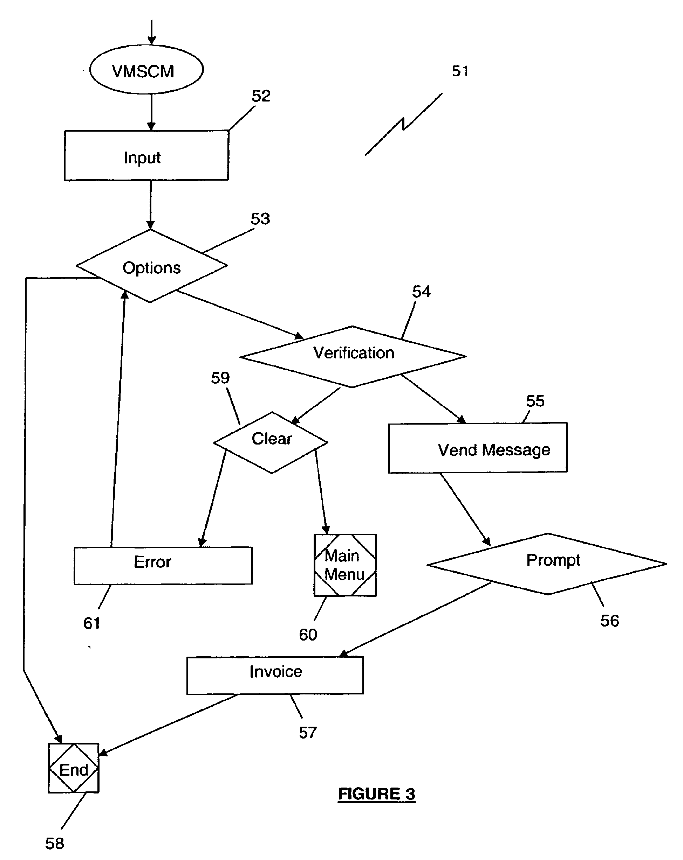

In Figure 3, the user inputs and the prompts returned by the vending machine software control module (VMSCM) are indicated generally by the reference numeral 51. A customer requests a packet of cigarettes and the EPOS apparatus operator presses the vending button on the user input device at 52. A list of vending options is displayed at 52 and the VMSCM monitors for a user option at 53. The operator makes a selection and the VMSCM checks if the selection made by the user is valid at 54. If the selection is valid, the VMSCM sends the vending message to the vending machine server at 55 and the machine vends the desired product. The VMSCM checks if the vend was successful by prompting the operator at 56, and if it was, the VMSCM adds the value of the vended product to the total invoice at 57 and the VMSCM ends at 58. If the operator fails to supply a vending option at 53, the VMSCM ends at 58 after a predetermined time. If VMSCM discovers that an invalid vending option has been supplied at 54, the VMSCM prompts the operator to clear the transaction request at 59. If the operator agrees, the VMSCM returns the main menu onto the display screen at 60. If the operator replies no to the clear prompt at 59, the VMSCM returns an invalid option error at 61 and returns the get user option prompt at 53 onto the display screen.

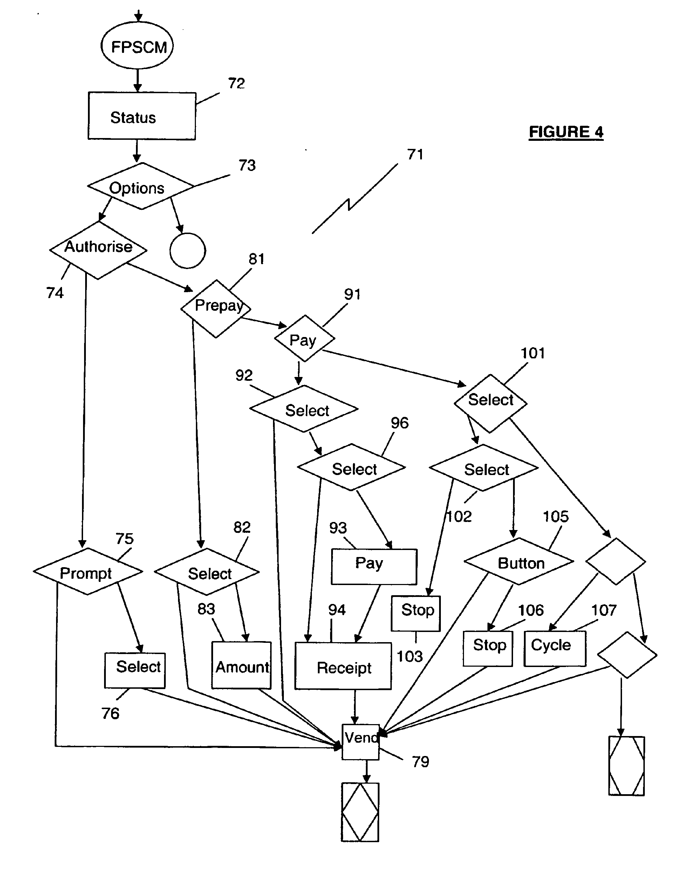

In Figure 4 the user inputs and the prompts returned by the fuel pump software control module (FPSCM) are indicated generally by the reference numeral 71. A till operator presses the FPSCM button on the till at 72 and the current status of all the pumps (or if there are more than nine, the first nine depending on the GUI and the capability of the display screen). The FPSCM monitors for a user option at 73 and if a customer has lifted a pump the user may opt to select the authorise option at 74. The FPSCM prompts for the user to select the pump to authorise at 75 and the user selects a pump at 76. The FPSCM communicates a command signal to the controller of the selected pump and fuel is vended at 79. When fuel is vended the FPSCM ends.

Alternatively, if a user opts to switch a pump to prepay at 81 the FPSCM prompts for a pump selection at 82. If the user selects a pump and a customer supplies the prepaid amount at 83, the FPSCM communicates a command signal to the controller of the selected pump and fuel is vended at 79.

Alternatively, the user can select the customer pay option at 91 and the FPSCM prompts the user to select a pump which the customer wishes to pay for at 92. The user selects a pump and if there is more than one transaction at 96 the user selects which transaction to pay at 93. This selected transaction, or if there is only one transaction, the single transaction is added to the receipt at 94 and the paid transaction is locked at 94 to prevent two customers paying for the same transaction. The receipt is printed and the FPSCM ends at 79.

Alternatively, the user may opt to select a pump stop option at 101 and the FPSCM prompts for a pump selection at 102. The user selects a pump and the FPSCM sends a command signal to stop the selected pump at 103. If a user presses the stop button twice at 105, all pumps are stopped at 106. This is a security feature in the event of accidents, fires and the likes. If there are a large number of pumps in the forecourt the FPSCM presents the option of cycling through all of the pumps on the display screen nine at a time for example at 107.

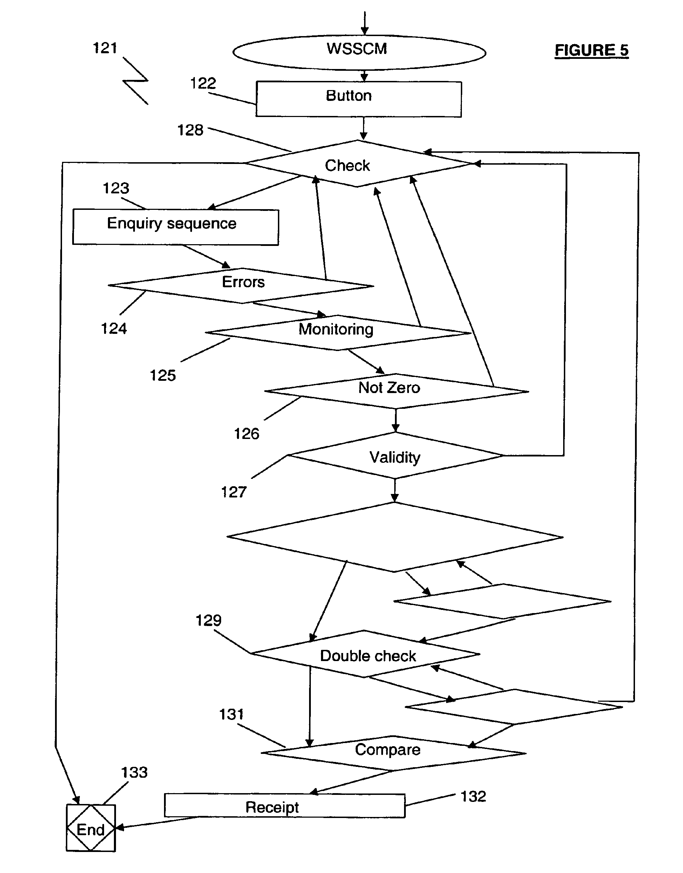

In Figure 5, the user inputs and internal enquiry sequences of the weighing scales software control module (WSSCM) are indicated generally by the reference numeral 121. A till operator presses the WSSCM button on the till at 122 and the WSSCM runs a reset program. The WSSCM monitors the scales and if the user sets fruit or vegetable on them, the WSSCM runs an enquiry sequence at 123 starting with monitoring for errors at 124 and if no errors are detected the WSSCM monitors that the weight of the object on the scales is steady at 125. If the weight is steady, the WSSCM checks that the weight is not zero at 126 and if the weight is not zero the WSSCM checks that the weight is valid at 127. If the WSSCM detects a negative response to any of these checks it will stop the internal enquiry sequence and return to check that the communication between the scales and the EPOS apparatus is in place at 128. The WSSCM sends a validation request to double check the information already obtained at 129 and the validated data is compared with the first set of data at 131. If the data compares the WSSCM runs a calculation program to generate a cost of the weighed product and the cost is added to the receipt at 132 and the WSSCM ends at 133.

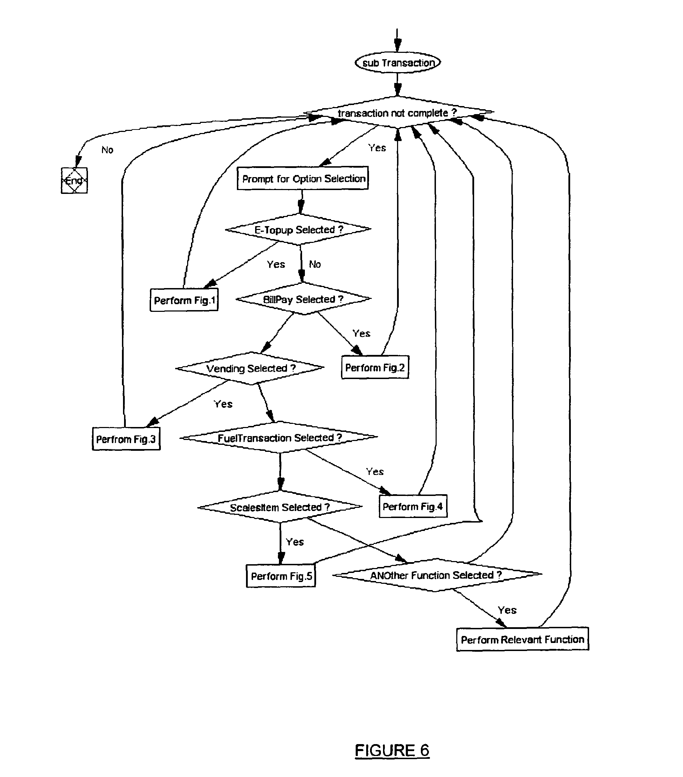

Figure 6 illustrates how the system can operate together where the user is provided with options so as to select a telephone top up, a bill pay service, use of the vending machine, a fuel transaction or the use of weighing scales to sell products sold by weight.

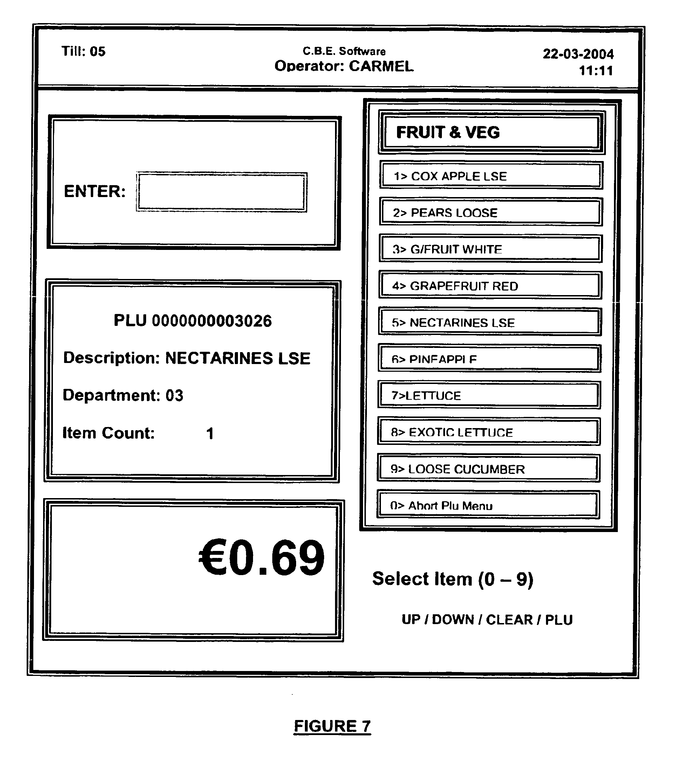

Referring to Figure 7 the drop down menu is operated by an operator selecting the required button on the keyboard. This calls the relevant Drop Down Menu. From this menu the operator presses the number corresponding to the line number of the required product as shown in the sample screen of Figure 7.

The drop down menu allows operators to sell any product with just two key strokes. The options available 1-9 represent the numerics on the keyboard, 0 allows the operator to exit. This means the operator does not have to scroll up and down through a list which may contain 30 or 40 items ― thus slowing down the selection process. Traditionally if an operator wanted to sell an item without a barcode e.g. nectarines, they would have to look up the relevant product code (normally three or four digits)for the nectarine and key in this code and press the Enter button or equivalent. This would involve 4 or 5 keystrokes.

The invention ensures an operator can sell any product by only pressing two buttons - the relevant drop down menu key and the required line number. There is also no need to keep a list of products and their codes at the checkout - thus also saving time.

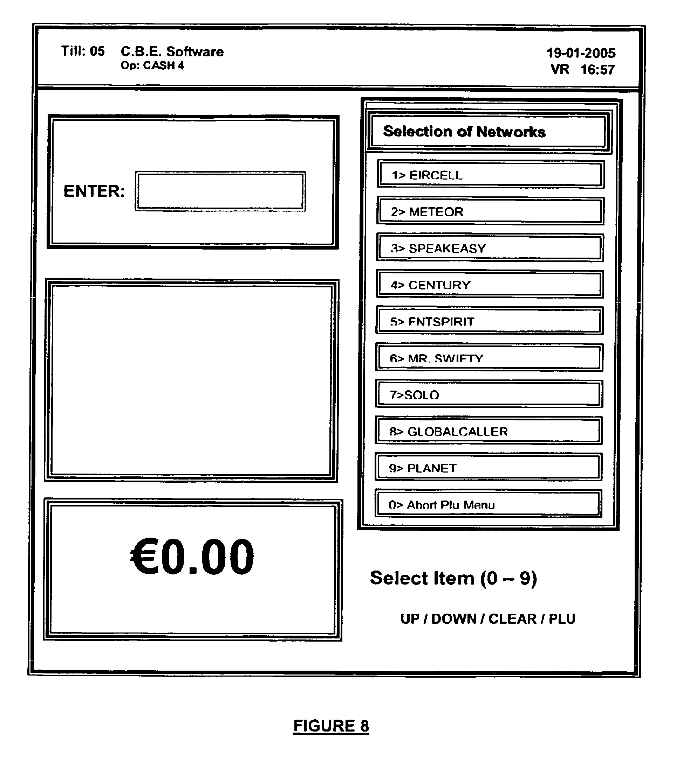

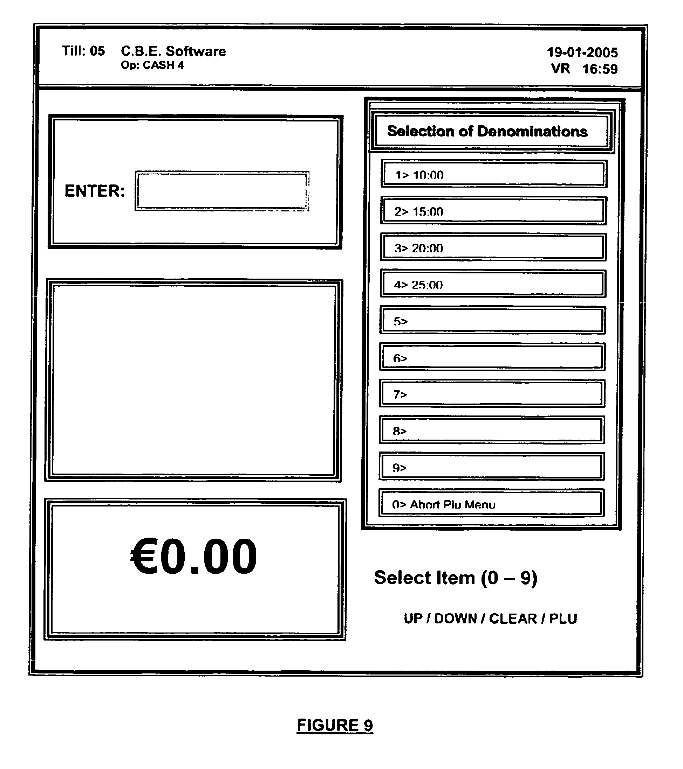

Figures 8 and 9 explain the use of the drop down menu to sell mobile phone top-up credits. On the till, the operator presses the top-up button and the screen of Figure 8 appears. The operator chooses one of the top-up providers by pressing the relevant line number and the screen of Figure 9 appears. The operator selects the denomination of the top-up required by pressing the relevant line number and this will return the required top-up to the sales screen. The operator then sub-totals the transaction as normal and cashes it off. At this stage the top-up slip will be issued from the till printer containing the top-up pin number.

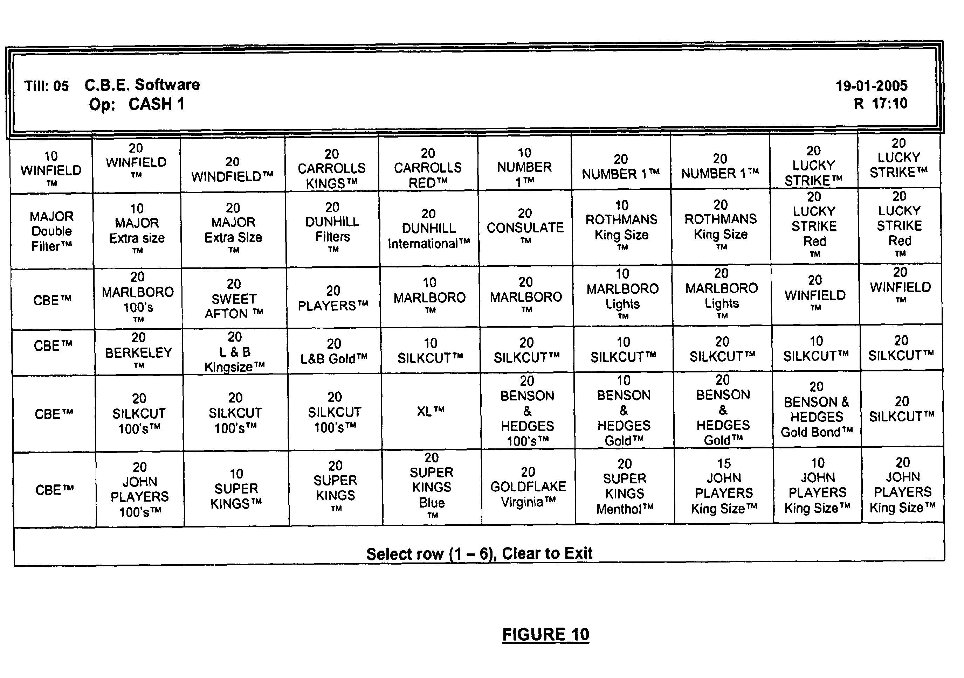

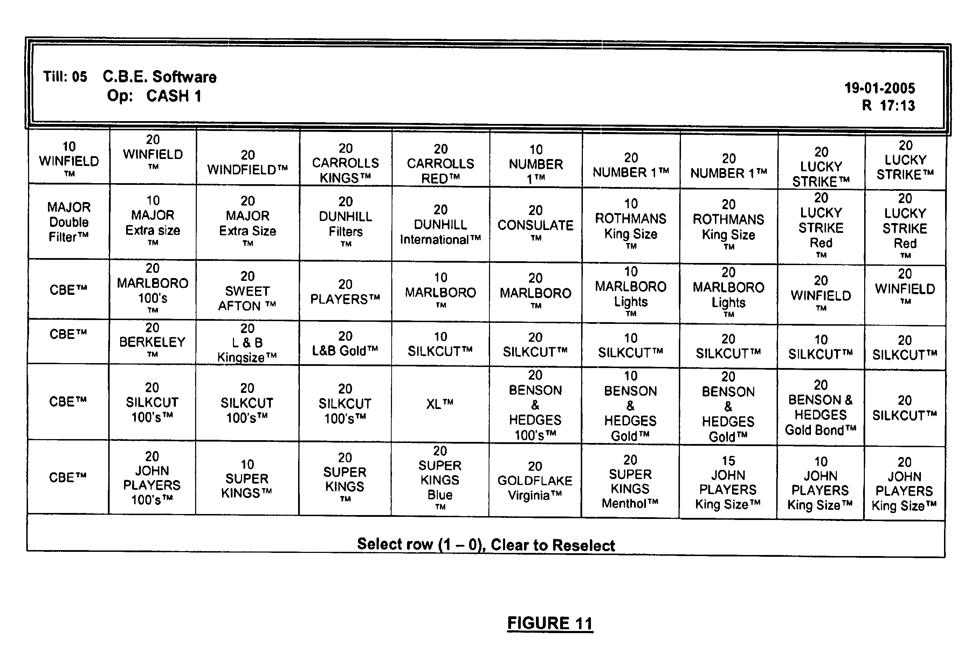

Figures 10 and 11 explain the use of the drop down menu to operate a vending apparatus using the invention. The operator presses the required button on the keyboard to sell products via the vending apparatus e.g. cigarettes. The screen of Figure 10 appears. The operator selects the relevant row by pressing the corresponding number. The screen of Figure 11 then appears. The operator selects the relevant column by pressing the corresponding number. The required product is dispensed from the vending machine and the sale of the item is also registered on the EPOS apparatus.

Cigarettes are used only as an example and do not preclude the use of other products. This process is dependant on using a numeric keypad but can also utilize the use of graphic images and a touchscreen.

Variations and modifications can be made without departing from the scope of the invention as defined in the appended claims.

## Claims

1. An electronic point of sale (EPOS) multi-task apparatus for the purchase of mobile telephone credit and other products in a retail environment, the other products being selected from the group comprising dry products, groceries, hospitality goods, fuel, cigarettes, fruit and vegetables; the apparatus being linkable to a main server over a network, the apparatus comprising a central processing unit and associated memory, a user input device comprising a keyboard and a bar code scanning means, a printer, a releasable and lockable till drawer and an integrated chip and pin payment card reader, the apparatus having a plurality of software control modules for controlling separate ones of the multi task product purchase functions, with one software control module integrated into the EPOS multi-task apparatus and being operable to provide a product comprising a mobile telephone credit for a customer from one or more separate merchants, issue the mobile telephone credit product to the customer, invoice the purchase of the mobile telephone credit product and other products on the EPOS apparatus as one transaction, and print a customer receipt on the printer for the completed transaction, the software module (MPTSCM) for telephone credit comprises:
a top-up button or icon for mobile telephone credit;
means for displaying a list of available mobile telephone networks (1);
means for selecting a telephone network (2);
means for selecting a denomination for the selected telephone network (6, 9, 20, 24);
means for verifying the denomination selected (24); and
means for adding the selected denomination to a customer's receipt (25); and
means for printing a "top-up voucher" having a unique identifier to enable a customer to input credit into their telephone account, the "top-up voucher" being printed on the printer with the customer receipt, whereby the completed transaction can be conducted by an operator through the EPOS apparatus.

2. An electronic point of sale apparatus as claimed in Claim 1, in which the software control module has means for presenting a menu of choices of products in response to activation of a command key or an icon by a user.

3. An electronic point of sale apparatus as claimed in any one of the preceding claims, in which the EPOS apparatus has a software control module interfacing with an electronic fund transfer apparatus.

4. An electronic point of sale apparatus as claimed in Claim 3, in which the EPOS apparatus has a further software control module for accessing customer accounts.

## Patentansprüche

1. Vielseitiges Gerät einer elektronischen Verkaufsstelle (EPOS) für den Kauf von Mobiltelefonguthaben und anderen Produkten in einem Einzelhandelsumfeld, wobei die anderen Produkte ausgewählt werden aus der Gruppe, die Trockenprodukte, Lebensmittel, gastgewerbliche Waren, Kraftstoff, Zigaretten, Obst und Gemüse umfasst; wobei das Gerät mit einem Hauptserver über ein Netzwerk verbunden werden kann, wobei das Gerät eine Zentraleinheit und einen dazugehörigen Speicher, eine Benutzereingabevorrichtung, die eine Tastatur und ein Strichcode-Abtastmittel umfasst, einen Drucker, eine auf- und verschließbare Kassenschublade und ein integriertes Chip-und-PIN-Zahlungskarten-Lesegerät umfasst, wobei das Gerät eine Vielzahl von Software-Steuermodulen aufweist, um einzelne Funktionen der vielseitigen Produktkauffunktionen zu steuern, wobei ein Software-Steuermodul in das vielseitige EPOS-Gerät integriert ist und betriebsbereit ist, um ein Produkt bereitzustellen, das ein Mobütclefbnguthaben für einen Kunden von einem oder mehreren einzelnen Händlern umfasst, das Mobiltelefonguthaben-Produkt an den Kunden auszugeben, den Kauf des Mobiltelefonguthaben-Produkts und anderer Produkte an dem EPOS-Gerät in einer einzigen Transaktion in Rechnung zu stellen und einen Kundenbeleg auf dem Drucker für die abgewickelte Transaktion zu drucken, wobei das Software-Modul (MPTSCM) für Telefonguthaben folgendes umfasst:
eine Schaltfläche oder ein Icon zum Aufladen von Mobiltelefonguthaben;
Mittel zum Anzeigen einer Liste verfügbarer Mobiltelefonnetzwerke (1);
Mittel zum Auswählen eines Telefonnetzwerks (2);
Mittel zum Auswählen einer Bezeichnung für das ausgewählte Telefonnetzwerk (6, 9,20,24);
Mittel zum Überprüfen der ausgewählten Bezeichnung (24); und
Mittel zum Hinzufügen der ausgewählten Bezeichnung auf einen Kundenbeleg (25); und
Mittel zum Drucken eines "Aufladegutscheins", der eine einzigartige Identifizierung aufweist, um es einem Kunden zu ermöglichen, ein Guthaben auf sein Telefonkonto einzugeben, wobei der "Aufladegutschein" ist auf dem Drucker mit dem Kundenbeleg gedruckt wird, wodurch die erledigte Transaktion von einem Bediener über das EPOS-Gerät ausgeführt werden kann.

2. Elektronisches Verkaufsstellengerät nach Anspruch 1, wobei das Software-Steuermodul Mittel aufweist, um als Reaktion auf die Aktivierung einer Befehlstaste oder eines Icons durch einen Benutzer ein Menü mit Auswahlmöglichkeiten von Produkten vorzulegen.

3. Elektronisches Verkaufsstellengerät nach einem der vorhergehenden Ansprüche, wobei das EPOS-Gerät ein Software-Steuermodul aufweist, das eine Schnittstelle mit einem elektronischen Geldmittelüberweisungsgerät aufweist.

4. Elektronisches Verkaufsstellengerät nach Anspruch 3, wobei das EPOS-Gerät ferner ein Software-Steuermodul zum Zugriff auf Kundenkonten aufweist.

## Revendications

1. Dispositif multitâche d'un point de vente électronique (EPOS) pour l'achat de crédit de téléphone mobile et d'autres produits dans un environnement de vente au détail, les autres produits étant sélectionnés dans le groupe comprenant des produits secs, des denrées alimentaires, des produits hôteliers, du carburant, des cigarettes, des fruits et légumes ; l'appareil pouvant être relié à un serveur principal à travers un réseau, l'appareil comprenant une unité centrale et une mémoire associée, un dispositif de saisie utilisateur comprenant un clavier et un moyen de balayage de code à barres, une imprimante, un tiroir caisse pouvant être déverrouillé et verrouillé et un lecteur de carte de paiement à puce et code PIN intégré, l'appareil présentant une pluralité de modules de commande logiciels pour commander des fonctions séparées parmi les fonctions d'achat de produit multitâches, un module de commande logiciel étant intégré dans l'appareil EPOS multitâche et opérationnel pour fournir un produit comprenant un crédit de téléphone mobile pour un client en provenance d'un ou de plusieurs commerçants, émettre le produit de crédit de téléphone mobile à destination du client, facturer l'achat du produit de crédit de téléphone mobile et d'autres produits sur l'appareil EPOS en une seule transaction, et imprimer un reçu client sur l'imprimante pour la transaction achevée, le module logiciel (MPTSCM) pour crédit téléphonique comprenant :
un bouton ou une icône de recharge pour un crédit de téléphone mobile ;
des moyens pour afficher une liste de réseaux de téléphone mobile (1) disponibles ;
des moyens pour sélectionner un réseau téléphonique (2) ;
des moyens pour sélectionner une désignation pour le réseau téléphonique sélectionné (6, 9, 20, 24) ;
des moyens pour vérifier la désignation sélectionnée (24) ; et
des moyens pour ajouter la désignation sélectionnée à un reçu (25) pour le client ; et
des moyens pour imprimer un "bon de recharge" portant un identificateur unique afin de permettre à un client d'entrer du crédit sur son compte téléphonique, le "bon de recharge" étant imprimé sur l'imprimante avec le reçu client, de manière à ce que la transaction achevée puisse être réalisée par un opérateur à travers l'appareil REOS.

2. Appareil de point de vente électronique selon la revendication 1, dans lequel le module de commande logiciel dispose de moyens pour présenter un menu de choix de produits en réponse à une activation d'une touche de commande ou d'une d'icône par un utilisateur.

3. Appareil de point de vente électronique selon l'une quelconque des revendications précédentes, dans lequel l'appareil EPOS comporte un module de commande logiciel faisant l'interface avec un appareil électronique de transfert de fonds.

4. Appareil de point de vente électronique selon la revendication 3, dans lequel l'appareil EPOS comporte un autre module de commande logiciel pour accéder à des comptes client.
